# EUROPÄISCHE PATENTANMELDUNG

(11) **EP 4 566 803 A1**
(43) Veröffentlichungstag der Anmeldung: **11.06.2025**
(21) Anmeldenummer: 24212270.3
(22) Anmeldetag: 12.11.2024
(51) Int. Cl.: B29D 30/06, B29D 30/66, B60C 11/16

(54) **FORMSTIFT, VULKANISIERUNGSVORRICHTUNG UND FAHRZEUGLUFTREIFEN**

(30) Priorität: 04.12.2023 DE 102023212195
(71) Anmelder: Continental Reifen Deutschland GmbH, 30175 Hannover (DE)
(72) Erfinder: Spechtmeyer, Torben, 30175 Hannover (DE); Schlittenhard, Jan, 30175 Hannover (DE); Wackerhage, Tanja, 30175 Hannover (DE); Gleeson, Ruaidhri, 30175 Hannover (DE)
(74) Vertreter: Continental Corporation

(57) **Zusammenfassung**

Formstift (30) für ein Vulkanisationssegment (21) einer Vulkanisationsvorrichtung (20) zum Ausbilden eines Spikelochs (3) in einer Lauffläche (1a) eines Fahrzeugluftreifens (1), wobei der Formstift (30) aufweist:
- einen Fixierungsabschnitt (31d) zum Fixieren des Formstifts (30) in dem Vulkanisationssegment (21);
- Formabschnitte (31a, 31b, 31c), die sich in Längsrichtung (X) an den Fixierungsabschnitt (31d) anschließen, wobei die Formabschnitte (31a, 31b, 31c) jeweils einen Form-Durchmesser (Da, Db, Dc) aufweisen,
wobei von einer Oberfläche (32) des Fixierungsabschnittes (31d) mindestens eine Lamelle (34) in Richtung eines oberen Formabschnitts (31a), der in Längsrichtung (X) an den Fixierungsabschnitt (31d) angrenzt, absteht,

Die mindestens eine Lamelle (34) ist mit einer Wandung (35) des oberen Formabschnitts (31a) verbunden und eine Lamellenhöhe (H) der mindestens einen Lamelle (34) wird ausgehend von der Wandung (35) des oberen Formabschnittes (31a) kleiner, so dass die mindestens eine Lamelle (34) an ihrem Berührpunkt mit der Wandung (35) eine maximale Lammellenhöhe (Hmax) aufweist.

## Beschreibung

Die Erfindung betrifft einen Formstift für eine Vulkanisationsvorrichtung gemäß dem Oberbegriff des Anspruches 1, eine Vulkanisationsvorrichtung sowie einen Fahrzeugluftreifen, insbesondere hergestellt mit der Vulkanisationsvorrichtung.

Spikereifen, d.h. Fahrzeugluftreifen mit umfangsseitig angeordneten Spikes, weisen üblicherweise Spikes auf, die aus Metall gefertigt sind. Ein Spikekörper des jeweiligen Spikes besteht dazu normalerweise aus Stahl oder Aluminium und ein Pin des Spikes, der in dem Spikekörper aufgenommen oder eingebettet ist und aus diesem oberseitig herausragt, ist normalerweise aus einem Hartmetall oder Stahl gefertigt. Für den Pin ist ein härteres Material gewählt als für den Spikekörper, da der Pin in das Eis auf der Fahrbahn eindringt und über diesen die Kräfte übertragen werden. Der Spikekörper hingegen sollte verschleißfest sein, um den Pin über die gesamte Lebensdauer des Fahrzeugluftreifens zu stützen.

Weiterentwicklungen eines solchen Spikes betreffen das Material des Spikekörpers, der wie beispielsweise in EP 3 543 039 B1 beschrieben, aus einem Gummimaterial besteht, das insbesondere den Pin seitlich umgibt und diesen auch seitlich abstützt. Diese Spikes haben den Vorteil einer besseren Eisperformance und einer verbesserten Verschleißfestigkeit.

Beide Arten von Spikes, d.h. herkömmliche Spikes mit Spikekörpern aus Metall und Spikes mit Spikekörpern aus Gummi, werden mechanisch und/oder chemisch mit dem Fahrzeugluftreifen verbunden, wobei ein Verfahren zur chemischen Verbindung beispielsweise in EP 2 255 959 B1 oder EP 2 777 923 A1 beschrieben ist. Demnach wird als ein Haftsystem oder ein Haftvermittler eine trockene Beschichtung auf den Spikekörper aufgetragen und der Spikekörper anschließend in vorgefertigte Spikelöcher im Fahrzeugluftreifen gepresst, wie beispielsweise auch in EP 2 641 754 B1 oder US 10 232 672 B2 beschrieben. Durch Induktionsheizen (oder eine andere Art der Wärmeerzeugung, beispielsweise in einem Autoklav) wird die trockene Beschichtung auf dem Spikekörper anschließend durch Wärme aktiviert und dadurch eine chemische Verbindung zwischen dem Spikekörper und dem Fahrzeugluftreifen hergestellt.

Bei Fahrzeugluftreifen mit derartigen Spikes besteht ein Zielkonflikt zwischen der Eisperformance und der Verschleißfestigkeit im Betrieb des Fahrzeugluftreifens. Da es für die Verschleißfestigkeit gesetzliche Grenzen gibt, ist die Eisperformance limitiert, insbesondere für Spikekörper aus Stahl oder Aluminium. Bei Spikes mit Spikekörpern aus Gummi hingegen schränkt dieser Zielkonflikt weniger stark ein, allerdings verschlechtert sich für derartige Spikes die Dauerhaltbarkeit des Spikes am Fahrzeugluftreifen. Dadurch erhöht sich das Risiko, während der Lebensdauer des Fahrzeugluftreifens einen Spike zu verlieren. Die Ursache ist insbesondere in dem Haftvermittler zwischen dem Gummimaterial des Spikekörpers und dem Gummimaterial des Fahrzeugluftreifens zu sehen, wobei der Haftvermittler bei einer Gummi-Gummi-Verbindung im Vergleich zu einer Metall-Gummi-Verbindung im Hinblick auf die Dauerhaltbarkeit weniger beständig ist. Daher kann es zu einer Beschädigung in der chemischen Verbindung zwischen dem Spikekörper aus Gummi und dem Fahrzeugluftreifen kommen, was zu einem Verlust des jeweiligen Spikes führen kann. Weiterhin kann es aber auch zu Beschädigungen in der Verbindung zwischen dem Pin und dem Spikekörper aus Gummi kommen, wodurch sich eine offene Verbindung zwischen beiden ausbilden kann, in der sich wiederum Sand und Schmutz einlagern kann. Dadurch können die Dauerhaltbarkeit und auch der Verschleiß zusätzlich beeinträchtigt werden.

Weitere Spikes sind in RU 2292269 C2 beschrieben, wobei darin vorgesehen ist, einen Pin aus einem Verbundmaterial aus Metall und Keramik zu verwenden, wobei der Pin in seinem unteren Abschnitt über eine Taille oder eine Verengung in den Fußabschnitt übergeht. In US 8 215 354 B2 ist ferner ein Spike vorgesehen, der mehrere Pins innerhalb eines kompressiblen Materials aufweist, wobei die Pins nicht aus dem kompressiblen Material und auch nicht aus der Lauffläche hervorragen.

Zum Einbringen der Spikelöcher in den Fahrzeugreifen ist normalerweise vorgesehen, auf einer Oberfläche eines Vulkanisationssegmentes einer Vulkanisationsvorrichtung senkrecht abstehende Formstifte (Mold-Pin) bereitzustellen, die beim Vulkanisierungsvorgang in die Lauffläche ragen und dadurch das Spikeloch ausbilden. Ein Fixierungsabschnitt des Formstifts dient dabei der Fixierung des Formstifts in dem Vulkanisationssegment und sich daran anschließende Formabschnitte formen das eigentliche Spikeloch, in das der Spike nachfolgend eingepresst wird.

Beim Entformen des Fahrzeugluftreifens kann es ja nach Dimension des Formstifts zu einem Abbrechen oder Beschädigen des Formstiftes kommen. In EP 2719523 B1 ist dazu beschrieben, dass ein Fuß-Formabschnitt, der den Fußabschnitt des Spikes nachbildet, aus mehreren Segmenten besteht, die beim Entformen umklappen, so dass sich ein Durchmesser des Fuß-Formabschnitts verkleinert, was das Entformen erleichtert.

In JP 6690927 B2 stehen Betätigungsabschnitte in Längsrichtung senkrecht von dem Fixierungsabschnitt des Formstifts ab, die radial nach außen hin immer höher werden und dabei einen sich an den Fixierungsabschnitt nach oben hin anschließenden oberen Formabschnitt nicht berühren. Diese Betätigungsabschnitte dienen der Betätigung des Formstifts, um diesen einfacher in ein Gewinde am Vulkanisationssegment eindrehen oder aus diesem herausdrehen zu können.

Der folgenden Erfindung liegt die Aufgabe zugrunde, einen Formstift für eine Vulkanisationsvorrichtung sowie eine Vulkanisationsvorrichtung mit mehreren solcher Formstifte bereitzustellen, die einen einfachen und wartungsarmen Betrieb zur Herstellung eines Fahrzeugluftreifens mit Spikelöchern ermöglicht. Ferner liegt die Aufgabe zugrunde, einen Fahrzeugluftreifen bereitzustellen, insbesondere hergestellt durch eine solche Vulkanisationsvorrichtung, bei dem das Bewegungsverhalten des Spikes verbessert werden kann.

Diese Aufgaben werden durch einen Formstift, eine Vulkanisationsvorrichtung sowie einen Fahrzeugluftreifen gemäß den unabhängigen Ansprüchen gelöst. Die Unteransprüche geben bevorzugte Weiterbildungen an.

Erfindungsgemäß ist demnach ein Formstift für ein Vulkanisationssegment einer Vulkanisationsvorrichtung vorgesehen, zum Ausbilden eines Spikelochs in einer Lauffläche eines Fahrzeugluftreifens, wobei der Formstift aufweist:
- einen Fixierungsabschnitt zum Fixieren des Formstifts in dem Vulkanisationssegment;'
- Formabschnitte, die sich in Längsrichtung an den Fixierungsabschnitt anschließen, wobei die Formabschnitte jeweils einen Form-Durchmesser aufweisen,

wobei von einer Oberfläche des Fixierungsabschnittes mindestens eine Lamelle, vorzugsweise mindestens zwei Lamellen, in Richtung eines oberen Formabschnitts, der in Längsrichtung an den Fixierungsabschnitt angrenzt, absteht bzw. sich davon weg erstreckt,
wobei die mindestens eine Lamelle mit einer Wandung des oberen Formabschnitts direkt seitlich (in Querrichtung bzw. in radialer Richtung bezüglich des Formstifts) verbunden ist und eine Lamellenhöhe (Ausdehnung in die Längsrichtung) der mindestens einen Lamelle ausgehend von der Wandung des oberen Formabschnittes in die Querrichtung bzw. in radialer Richtung (bezüglich des Formstifts) kleiner wird, so dass die mindestens eine Lamelle an ihrem Berührpunkt mit der Wandung eine maximale Lammellenhöhe aufweist.

Durch die Erfindung werden bereits einige Vorteile erreicht. So wird durch die Lamellen zum einen erreicht, dass das Entformen des Formstifts beispielsweise bei breiteren unteren Formabschnitten und/oder Fußabschnitten und schlanken oder schmalen oberen Formabschnitten einfacher erfolgen kann und dabei eine Beschädigung oder ein Brechen des Formstifts vermieden wird, da dieser durch die Lamellen abgestützt wird. Ein Austausch der Formstifte wird also vermieden, da dauerhaltbarere Formstifte bereitgestellt werden, was den Wartungsaufwand minimiert.

Ergänzend führen die Lamellen am Formstift im fertigen Fahrzeugluftreifen dazu, dass seitlich des ausgebildeten Spikelochs lamellenartige Vertiefungen verlaufen, wobei diese Vertiefungen in Querrichtung (bezüglich des Spikelochs) direkt in einen oberen Endbereich des Spikelochs übergehen, wobei eine Tiefe der Vertiefung mit größer werdendem Abstand zum Spikeloch geringer wird bzw. der Grund der Vertiefung ausgehend vom Spikeloch in Querrichtung bzw. radial nach außen zur Oberfläche hin ansteigt. Eine solche Vertiefung führt dazu, dass sich die Flexibilität oder Bewegungsfähigkeit des eingepressten Spikes verändert, wobei je nach Form und Verlauf der Vertiefung im Fahrzeugluftreifen und damit Form und Verlauf der Lamelle am Formstift ein Bewegungsverhalten des Spikes gezielt eingestellt werden kann. Die Lamelle kann damit eine Doppelfunktion erfüllen.

Gemäß einer weiteren Ausführungsform ist vorgesehen, dass der obere Formabschnitt des Formstifts, der in Längsrichtung an den Fixierungsabschnitt angrenzt, einen oberen Form-Durchmesser aufweist, der kleiner ist
- als ein unterer Form-Durchmesser eines unteren Formabschnitts des Formstifts, der in Längsrichtung an den oberen Formabschnitt angrenzt, und
- als ein Fuß-Durchmesser eines Fuß-Formabschnitts des Formstifts, der in Längsrichtung an den unteren Formabschnitt angrenzt.

Durch die Lamellen, die den Formstift über den oberen Formabschnitt abstützen, ist es demnach möglich, einen Formstift mit einem besonders schmalen oder schlanken oberen Formabschnitt bereitzustellen, beispielsweise mit einem oberen Form-Durchmesser von maximal 5mm, insbesondere maximal 4mm, vorzugsweise zwischen 1.5mm und 4mm, wobei sich der Formstift zum unteren Formabschnitt und zum Fuß-Formabschnitt aufweitet. Ein Abbrechen oder Beschädigen des Formstifts beispielsweise beim Entformen des Fahrzeugluftreifens nach dem Vulkanisieren wird durch die verbesserte Abstützwirkung vermieden und das Entformen dadurch insgesamt vereinfacht.

Gemäß einer weiteren Ausführungsform ist vorgesehen, dass der obere Formabschnitt eine zylindrische Form mit einem konstanten oberen Form-Durchmesser aufweist oder eine konische Form mit einem sich zum unteren Formabschnitt hin vergrößernden oberen Form-Durchmesser aufweist. Es können also an die Form des Spikes entsprechend angepasste Formen für den oberen Formabschnitt verwendet werden.

Gemäß einer weiteren Ausführungsform ist vorgesehen, dass der obere Formabschnitt einen oberen Form-Durchmesser von maximal 5mm, vorzugsweise maximal 4mm, aufweist und/oder der untere Formabschnitt einen unteren Form-Durchmesser von zwischen 1.5mm und 7mm aufweist. Der untere Formabschnitt, der in den Fußabschnitt übergeht, ist also über seine Längsausdehnung im Mittel breiter als der obere Formabschnitt, der über die Lamelle abgestützt wird.

Gemäß einer weiteren Ausführungsform ist vorgesehen, dass eine freie Kante der mindestens einen Lamelle, die zwischen der Oberfläche des Fixierungsabschnittes und der Wandung des oberen Formabschnittes verläuft, einen linearen Verlauf oder einen abgerundeten Verlauf oder einen abgestuften Verlauf aufweist, wobei die freie Kante der mindestens einen Lamelle zur Oberfläche des Fixierungsabschnittes hin abfällt. Es ist also eine flexible Auswahl des Verlaufs der freien Kante und damit auch der Form der jeweiligen Lamelle möglich, worüber auch die Form der Vertiefung im Fahrzeugluftreifen bestimmt wird. Darüber kann also sowohl die Abstützwirkung der Lamelle beeinflusst werden als auch die Bewegungsfähigkeit des Spikes im fertiggestellten Fahrzeugreifen.

Vorzugsweise ist weiterhin vorgesehen, dass die maximale Lamellenhöhe an der Wandung zwischen 2mm und 3mm beträgt. Durch eine solche maximale Höhe kann eine optimale Abstützwirkung erzielt sowie durch die dadurch ausgebildete Vertiefung auch ein ausreichender Einfluss auf die Bewegungsfähigkeit des Spikes erzielt werden. Durch eine entsprechende Wahl der maximalen Lamellenhöhe kann die Abstützwirkung und der Einfluss auf den Spike entsprechend variiert werden.

Vorzugsweise ist weiterhin vorgesehen, dass der Fixierungsabschnitt, die Formabschnitte und die mindestens eine Lamelle einteilig bzw. als eine bauliche Einheit gefertigt sind. Dadurch können der Herstellungsaufwand sowie die Stabilität des Formstifts insgesamt erhöht werden.

Erfindungsgemäß ist auch eine Vulkanisationsvorrichtung mit mehreren kreisförmig angeordneten Vulkanisationssegmenten zur Herstellung eines Fahrzeugluftreifens vorgesehen, wobei in einer Oberfläche des jeweiligen Vulkanisationssegments mehrere Aufnahmeöffnungen angeordnet sind, in die jeweils der Fixierungsabschnitt eines erfindungsgemäßen Formstiftes derartig aufgenommen ist, dass die Formabschnitte senkrecht von dem jeweiligen Vulkanisationssegment abstehen und die mindestens eine Lamelle von einer Oberfläche des jeweiligen Fixierungsabschnittes in Richtung der Wandung des oberen Formabschnitts, mit der die mindestens eine Lamelle seitlich in Querrichtung verbunden ist, hervorsteht.

Weiterhin ist ein erfindungsgemäßer Fahrzeugluftreifen mit einer Lauffläche und in der Lauffläche angeordneten Spikelöchern vorgesehen, der insbesondere in einer erfindungsgemäßen Vulkanisationsvorrichtung hergestellt ist, wobei in den Spikelöchern jeweils ein Spike eingebracht ist, wobei benachbart zu dem jeweiligen Spikeloch ausgehend von einer Oberfläche der Lauffläche mindestens eine lamellenartige Vertiefung, vorzugsweise zwei lamellenartige Vertiefungen, eingeformt sind, wobei ein oberer Endbereich des Spikelochs in Querrichtung in die mindestens eine Vertiefung übergeht, wobei eine Tiefe (ausgehend von der Oberfläche der Lauffläche) der Vertiefung mit größer werdendem Abstand zum Spikeloch, d.h. radial nach außen, geringer wird, insbesondere unmittelbar ausgehend von dem Spikeloch geringer wird. Der Grund der Vertiefung steigt also ausgehend von dem Spikeloch radial nach außen hin an. Ein solcher Fahrzeugluftreifen bietet sowohl in der Herstellung als auch im fertigen Zustand die oben beschriebenen Vorteile.

Vorzugsweise ist weiterhin vorgesehen, dass die mindestens eine Vertiefung an einem Übergang zum Spikeloch eine maximale Tiefe aufweist und die Tiefe der Vertiefung ausgehend davon mit größer werdendem Abstand zum Spikeloch geringer wird, insbesondere linear oder abgestuft oder abgerundet. Die Form der Vertiefung passt sich also an die Form der Lamelle an, so dass eine entsprechende Einstellbarkeit der Bewegungsfähigkeit des Spikes gegeben ist.

Vorzugsweise ist weiterhin vorgesehen, dass der jeweilige Spike in Längsrichtung aneinandergrenzend einen oberen Abschnitt, einen unteren Abschnitt und einen Fußabschnitt aufweist,
wobei der obere Abschnitt des Spikes durch einen Pin gebildet ist, wobei der Pin innerhalb des oberen Abschnittes
- einen Stützabschnitt aufweist, der innerhalb der Lauffläche angeordnet ist und der sich mit einer Außenseite direkt an der Lauffläche abstützt, so dass der Stützabschnitt des Pins keine zusätzliche stützende Ummantelung oder Umhüllung aufweist, und weiterhin
- einen hervorstehenden Abschnitt aufweist, der aus der Lauffläche herausragt, so dass ein freies Ende des Pins von der Lauffläche hervorsteht; und wobei ein oberes Querschnittsmaß innerhalb des oberen Abschnittes des Spikes über eine gesamte obere Längsausdehnung des oberen Abschnittes kleiner ist als ein Fuß-Querschnittsmaß des Fußabschnittes des Spikes zum Verankern des jeweiligen Spikes in dem Spikeloch, und wobei ein unteres Querschnittsmaß des unteren Abschnittes des Spikes über eine gesamte untere Längsausdehnung des unteren Abschnitts und bevor der untere Abschnitt in den Fußabschnitt übergeht größer oder gleich einem Trenn-Querschnittsmaß ist, das der obere Abschnitt an der Trennlinie einnimmt, die den oberen Abschnitt des Spikes von dem unteren Abschnitt des Spikes trennt.

Mit den Formstiften, die durch die Lamellen abgestützt sind, ist es also möglich, ein Spikeloch auszubilden, in dem ein Spike mit einem schmalen oder schlanken oberen Abschnitt mit einem oberen Querschnittsmaß von beispielsweise zwischen 1.5mm und 4mm eingepresst werden kann, der in einem breiter werdenden unteren Abschnitt mit einem unteren Querschnittsmaß von beispielsweise zwischen 1.5mm und 7mm und einen noch breiter werdenden Fußabschnitt mit einem Fuß-Querschnittsmaß von beispielsweise zwischen 6mm und 11mm übergeht. Bei einem solchen Spike kann der schmale und unummantelte Pin, der beispielsweise aus einem Hartmetall besteht, direkt an der Lauffläche anliegen, um die Dauerhaltbarkeit und die Eisperformance zu verbessern. Der mechanische Halt am Fahrzeugluftreifen kann durch den breiter werdenden unteren Abschnitt und den Fußabschnitt gewährleistet werden.

In den Zeichnungen zeigen:
Fig. 1 einen Ausschnitt einer Lauffläche eines Fahrzeugluftreifens;
Fig. 2 - 5 Detailansichten des Spikes gemäß Fig. 1 in unterschiedlichen Ausführungsformen; und
Fig. 6, 7 Detailansichten eines Formstifts als Bestandteil einer Vulkanisationsvorrichtung.

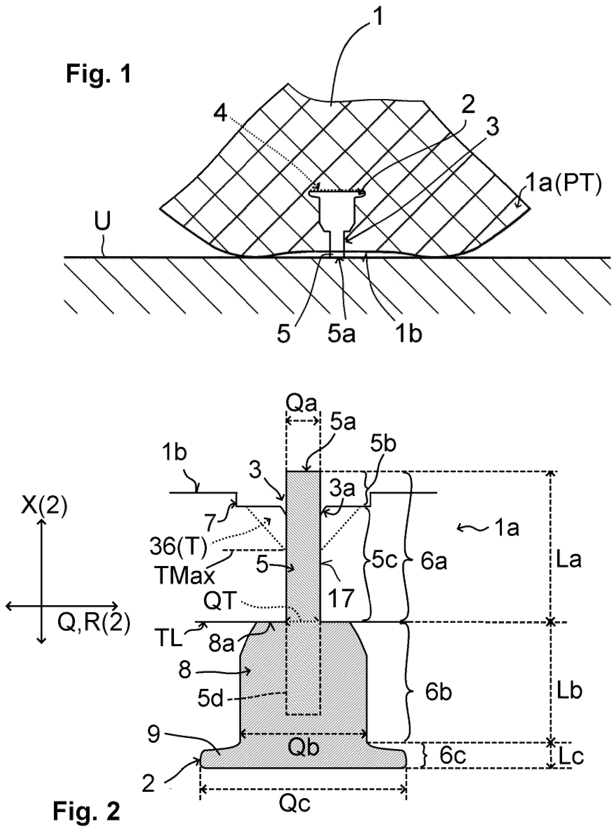

Figur 1 zeigt schematisch einen Ausschnitt eines Fahrzeugluftreifens 1, insbesondere Fahrzeugluftreifens, der auf einem Untergrund U abrollt und der auf seinem Umfang verteilt mehrere Spikes 2 aufweist. Unter einem Spike 2 wird dabei eine Art Stift oder Bolzen verstanden, der wie dargestellt in die profilierte Lauffläche 1a des Fahrzeugluftreifens 1 eingesetzt und darin verankert ist. Dazu werden bei der Herstellung des Fahrzeugluftreifens 1 in der Lauffläche 1a in bekannter Weise mehrere Spikelöcher 3 eingebracht, in die der jeweilige Spike 2 mechanisch eingepresst wird. Optional können anschließend der Fahrzeugluftreifen 1 und der eingepresste Spike 2 durch einen Haftvermittler 4 chemisch bzw. stoffschlüssig miteinander verbunden werden. Bei dem Haftvermittler 4 handelt es sich vorzugsweise um einen trockenen Haftvermittler 4, beispielsweise Parlock, Chemlock oder Chemosil, mit dem der Spike 2 vor dem Einpressen in das jeweilige Spikeloch 3 beschichtet wird. Der Haftvermittler 4 wird nach dem Einpressen des Spikes 2 in das jeweilige Spikeloch 3 durch eine gezielte Wärmebehandlung aktiviert, um die chemische Verbindung auszubilden.

Jeder Spike 2 weist wie in Fig. 2 in einer Detailansicht dargestellt einen in Längsrichtung X verlaufenden Pin 5 auf, der mit seinem freien Ende 5a im in das jeweilige Spikeloch 3 eingepressten Zustand aus der Lauffläche 1a herausragt bzw. hervorsteht. Der Spike 2 wird in einem oberen Abschnitt 6a lediglich durch diesen Pin 5 ausgebildet, d.h. in diesem oberen Abschnitt 6a ist keine Ummantelung oder Umhüllung vorgesehen. Der obere Abschnitt 6a deckt dabei nicht nur einen hervorstehenden Abschnitt 5b des Pins 5 ab, der im in das jeweilige Spikeloch 3 eingepressten Zustand aus der Lauffläche 1a herausragt bzw. hervorsteht, sondern auch einen Stützabschnitt 5c des Pins 5, der im in das jeweilige Spikeloch 3 eingepressten Zustand von dem Gummimaterial der Lauffläche 1a umfangsseitig umgeben ist (s. Fig. 1). Der Pin 5 wird also in diesem Stützabschnitt 5c lediglich durch das umgebende Gummimaterial der Lauffläche 1a abgestützt, d.h. eine Außenseite 17 des Pins 5 liegt direkt an der Lauffläche 1a an.

Der hervorstehende Abschnitt 5b oder der Stützabschnitt 5c des Pins 5 bzw. der obere Abschnitt 6a des Spikes 2 weist ein oberes Querschnittsmaß Qa auf, das zwischen 1,5mm und 4mm beträgt, wobei das obere Querschnittsmaß Qa die Querausdehnung (in Querrichtung Q oder radialer Richtung bezüglich des Spikes 2) in diesem oberen Abschnitt 6a (5b, 5c) des Spikes 2 charakterisiert. Das obere Querschnittsmaß Qa kann über eine obere Längsausdehnung La (Ausdehnung in Längsrichtung X) des oberen Abschnittes 6a variieren, beispielsweise bei einem konischen Verlauf des oberen Abschnitts 6a. Das obere Querschnittsmaß Qa kann bei einem runden Querschnitt beispielsweise durch einen Durchmesser oder bei einem nicht-runden Querschnitt durch einen lichten Durchmesser oder eine Breite gegeben sein. Der Pin 5 kann dabei in axialer Richtung (bezüglich des Fahrzeugreifens 1) breiter sein als in Umfangsrichtung (bezüglich des Fahrzeugreifens 1), so dass sich in Umfangsrichtung eine gute Griffkante und damit eine verbesserte Griffigkeit auf dem Untergrund, insbesondere dem Eis, ergibt.

Um bei einem solchen oberen Querschnittsmaß Qa Kräfte vom Eis auf dem Untergrund U effizient aufnehmen zu können, ist der Pin 5 aus einem Hartmetall gefertigt, beispielsweise aus Wolframcarbid oder einem anderen rein metallischen Material. Die obere Längsausdehnung La des oberen Abschnitts 6a wird vorzugsweise in Abhängigkeit einer Profiltiefe PT der Lauffläche 1a gewählt. Dadurch wird gewährleistet, dass auch im abgenutzten Zustand des Fahrzeugreifens 1 möglichst lang ein unumhüllter Bereich des Pins 5 aus der (abgenutzten) Lauffläche 1a heraustritt oder herausragt. Die obere Längsausdehnung La des oberen Abschnitts 6a kann dazu beispielsweise mindestens 3mm betragen, vorzugsweise zwischen 3mm und 10mm, insbesondere zwischen 4mm und 7mm.

Ein unterer Abschnitt 6b des Spikes 2 kann unterschiedliche Ausführungen haben, die nachfolgend näher beschrieben werden:
Gemäß der in Fig. 2 dargestellten Ausführungsform wird der Spike 2 ab einer Trennlinie TL, die den oberen Abschnitt 6a von dem unteren Abschnitt 6b des Spikes 2 trennt, nach unten (in Längsrichtung X) zu einem Fußabschnitt 6c des Spikes 2 hin breiter. Ein unteres Querschnittsmaß Qb, das die Querausdehnung in dem unteren Abschnitt 6b des Spikes 2 charakterisiert, variiert also über eine untere Längsausdehnung Lb des unteren Abschnitts 6b, insbesondere wird es zumindest bereichsweise größer. Das untere Querschnittsmaß Qb kann bei einem runden Querschnitt beispielsweise durch den Durchmesser oder bei einem nicht-runden Querschnitt durch den lichten Durchmesser oder durch eine Breite gegeben sein. Der untere Abschnitt 6b des Spikes 2 kann in axialer Richtung (bezüglich des Fahrzeugreifens 1) breiter sein als in Umfangsrichtung (bezüglich des Fahrzeugreifens 1), so dass sich in Umfangsrichtung eine gute Abstützwirkung an der Lauffläche 1a ergibt.

Gemäß der dargestellten Ausführung steigt das untere Querschnittsmaß Qb ab der Trennlinie TL zunächst stufenartig und anschließend kontinuierlich (leicht konisch) an und bleibt dann nahezu konstant, beispielsweise auf einem unteren Querschnittsmaß Qb von vorzugsweise zwischen 3mm und 7mm. Es sind aber auch andere Verläufe des unteren Querschnittsmaßes Qb denkbar, die zu einer solchen radialen Aufweitung (radial bezüglich des Spikes 2) des unteren Abschnitts 6b ab der Trennlinie TL führen, beispielsweise ein ab der Trennlinie TL linear ansteigendes Querschnittsmaß Qb bei einem konischen unteren Abschnitt 6b. Das untere Querschnittsmaß Qb kann also ab der Trennline TL bei beispielsweise zwischen 1.5mm und 7mm liegen. Die untere Längsausdehnung Lb liegt vorzugsweise zwischen 3mm und 6mm.

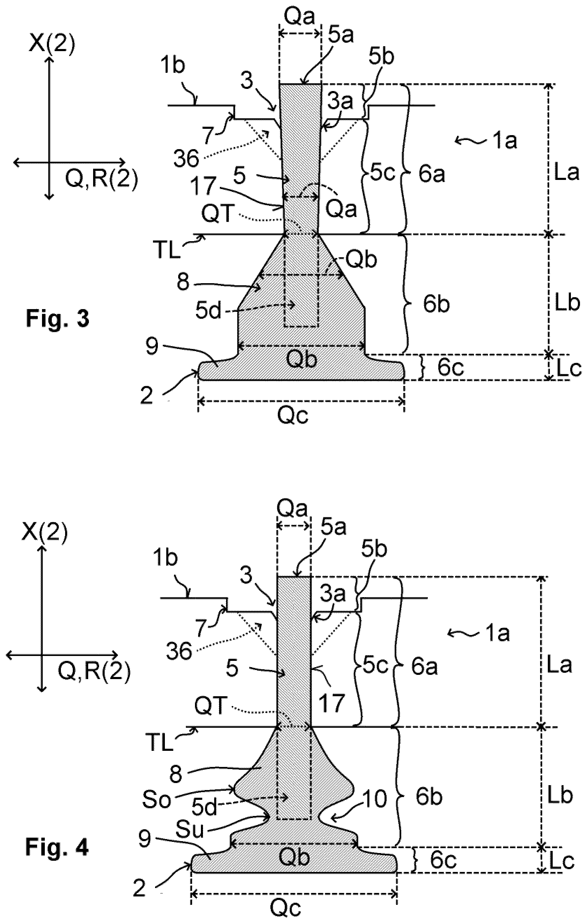

In der in Fig. 2 dargestellten Ausführungsform mit einem stufenartigen Anstieg des unteren Querschnittsmaßes Qb ab der Trennlinie TL ist das untere Querschnittsmaß Qb über die gesamte untere Längsausdehnung Lb des unteren Abschnitts 6b stets größer gleich einem Trenn-Querschnittsmaß QT, das der obere Abschnitt 6a an der (oder kurz vor der) Trennlinie TL einnimmt. Liegt kein solch stufenartiger Anstieg des unteren Abschnitts 6b ab der Trennlinie TL vor, sondern beispielsweise ein konischer Verlauf, wie beispielhaft in Fig. 3 dargestellt, kann das untere Querschnittsmaß Qb zumindest bereichsweise auch kleiner als das obere Querschnittsmaß Qa sein, insbesondere bei einem ebenfalls konisch verlaufenden Stützabschnitt 5c des Pins 5 im oberen Abschnitt 6a des Spikes 2. In einer solchen Ausführung ist dann zumindest die Bedingung erfüllt, dass das untere Querschnittsmaß Qb ab der Trennlinie TL nach unten zum Fußbereich 6c hin größer wird, d.h. das untere Querschnittsmaß Qb ist über die gesamte untere Längsausdehnung Lb des unteren Abschnitts 6b größer oder gleich dem Trenn-Querschnittsmaß QT, das der obere Abschnitt 6a an der Trennlinie TL einnimmt.

In den Ausführungsformen gemäß Fig. 2 und 3 wird der untere Abschnitt 6b des Spikes 2 durch einen Unterflansch 8 gebildet. In dem und/oder mit dem Unterflansch 8 ist ein unteres Ende 5d des Pins 5, das über den Stützabschnitt 5c mit dem freien Ende 5a des Pins 5 verbunden ist, verankert (angefügt oder eingepresst) und/oder stoffschlüssig verbunden. Dabei kann das untere Ende 5d beispielsweise über eine Verankerungstiefe (Einpresstiefe) von zwischen 2.5mm und 5mm in dem Unterflansch 8 verankert sein, wie in Fig. 2 und 3 gestrichelt angedeutet. Die Trennline TL verläuft dann an einer Oberseite 8a des Unterflanschs 8, von der der verankerte und/oder stoffschlüssig verbundene Pin 5 in die Längsrichtung X nach oben hin absteht. Der Unterflansch 8 weist über die gesamte untere Längsausdehnung Lb einen entsprechenden Verlauf des unteren Querschnittsmaßes Qb wie oben beschrieben auf.

Der Unterflansch 8 geht unterseitig in einen Fußflansch 9 über, der den Fußabschnitt 6c des Spikes 2 bildet. Der Fußflansch 9 und der Unterflansch 8 sind vorzugsweise einteilig bzw. als eine bauliche Einheit gefertigt. Der Fußabschnitt 6c weist ein Fuß-Querschnittsmaß Qc auf, das die Querausdehnung in dem Fußabschnitt 6b des Spikes 2 charakterisiert. Das Fuß-Querschnittsmaß Qc kann bei einem runden Querschnitt beispielsweise durch den Durchmesser oder bei einem nicht-runden Querschnitt durch den lichten Durchmesser oder durch eine Breite gegeben sein. Der Fußflansch 9 dient der mechanischen Befestigung bzw. mechanischen Verankerung des Spikes 2 im Spikeloch 3. Um ein Herausreißen des Spikes 2 aus dem Spikeloch 3 zu verhindern, ist das Fuß-Querschnittsmaß Qc größer als das untere Querschnittsmaß Qb des unteren Abschnitts 6b des Spikes 2 und gleichzeitig auch größer als das obere Querschnittsmaß Qa des oberen Abschnitts 6a des Spikes 2. Das Fuß-Querschnittsmaß Qc kann beispielsweise zwischen 6mm und 11mm betragen. Der Fußabschnitt 6c bzw. Fußflansch 9 kann in axialer Richtung (bezüglich des Fahrzeugreifens 1) schmaler sein als in Umfangsrichtung (bezüglich des Fahrzeugreifens 1), so dass sich in Umfangsrichtung ein verlängerter Hebel ergibt, der für eine gute mechanische Verankerung in der Lauffläche 1a sorgt.

Der Unterflansch 8 und der Fußflansch 9 dienen also sowohl der sicheren Aufnahme des Pins 5 als auch der mechanischen Verankerung und dem Abstützen des Spikes 2 im Spikeloch 3. Der Unterflansch 8 und der Fußflansch 9 sind dabei aus einem weicheren und leichteren Material gefertigt als der Pin 5, beispielsweise aus Aluminium. Dadurch wird den unterschiedlichen Anforderungen an das jeweilige Material Rechnung getragen. Während der Pin 5 hohe Kräfte aufnehmen und übertragen soll, und daher aus einem Hartmetall gefertigt ist, dient der Spikekörper aus Unterflansch 8 und Fußflansch 9 dem Abstützen am und der Verankerung im Fahrzeugluftreifen 1, wobei diese Verankerung verschleißfest sein soll, um den Spike 2 mit dem harten Pin 5 über die gesamte Lebensdauer des Fahrzeugluftreifens 1 zu stützen. Dafür ist ein weicheres Material vorteilhaft, was gleichzeitig zu einer Gewichts-Ersparnis führt und für den Spike 2 insgesamt weniger Hartmetall notwendig ist. Gleichzeitig wird der Pin 5 im oberen Abschnitt 6a von der umgebenden Lauffläche 1a abgestützt, so dass keine zusätzliche Ummantelung zum Abstützen nötig ist.

Da die obere Längsausdehnung La des oberen Abschnitts 6a an die Profiltiefe PT angepasst ist, treten der Unterflansch 8 und der Fußflansch 9, wenn überhaupt erst bei sehr starker Abnutzung des Fahrzeugluftreifens 1 aus der Lauffläche 1a hervor. Die untere Längsausdehnung Lb des unteren Abschnitts 6b, beispielsweise zwischen 3mm und 6mm, und eine Fuß-Längsausdehnung Lc des Fußabschnitts 6c, beispielsweise zwischen 1mm und 2mm, sind derartig gewählt, dass diese ausreichend Berührungsfläche mit der Lauffläche 1a bieten, so dass eine sichere mechanische Verankerung des Spikes 2 im Fahrzeugluftreifen 1 gewährleistet ist. Die obere Längsausdehnung La des oberen Abschnitts 6a, die untere Längsausdehnung Lb des unteren Abschnitts 6b und die Fuß-Längsausdehnung Lc des Fußabschnitts 6c können zusammen beispielsweise zwischen 7mm und 14mm betragen, was der Gesamthöhe des jeweiligen Spikes 2 entspricht.

Die untere Längsausdehnung Lb ist gemäß der dargestellten Ausführungsform größer als die Fuß-Längsausdehnung Lc, beispielsweise gilt Lc ≈ 0.2 x Lb, wodurch Material und Gewicht gespart werden kann. Allerdings kann die Fuß-Längsausdehnung Lc auch größer gewählt werden, beispielsweise Lc ≈Lb, wodurch ein Verkippen des Spikes 2 im Betrieb des Fahrzeugluftreifens 1 verhindert werden kann, da der Spike 2 durch die größere Längsausdehnung des Fußabschnitts 6c zusätzlich gestützt wird.

Dies kann aber auch dadurch erreicht werden, dass wie in Fig. 4 dargestellt der Unterflansch 8 bei gleichbleibendem Fußflansch 9 eine zusätzliche Einkerbung 10 aufweist, so dass sich im unteren Abschnitt 6b eine zusätzliche Variation des unteren Querschnittsmaßes Qb ergibt. Das untere Querschnittsmaß Qb wird also ab der Trennlinie TL in Längsrichtung X nach unten hin zunächst größer (konisch oder abgerundet), bis zu einem oberen Scheitelpunkt So, und anschließend wieder kleiner (konisch oder abgerundet), bis zu einem unteren Scheitelpunkt Su, an dem das untere Querschnittsmaß Qb innerhalb der unteren Längsausdehnung Lb am geringsten wird. Dabei gilt gemäß der dargestellten Ausführungsform, dass das untere Querschnittsmaß Qb in dem unteren Scheitelpunkt Su nicht kleiner wird als das obere Querschnittsmaß Qa des oberen Abschnitts 6a (bei einem zylindrischen Pin 5) oder zumindest nicht größer als das Trenn-Querschnittsmaß QT, das der obere Abschnitt 6a an der Trennlinie TL einnimmt (z.B. bei einem konischen Pin 5).

Anschließend wird das untere Querschnittsmaß Qb wieder größer (konisch oder abgerundet) und der Unterflansch 8 geht in den Fußflansch 9 über. Durch diese Einkerbung 10 wird zusätzlich zum Fußabschnitt 6c bzw. zum Fußflansch 9 eine weitere Erweiterung oder Aufweitung in Querrichtung Q (oder radialer Richtung bezüglich des Spikes 2) geschaffen, die ein seitliches Verkippen des Spikes 2 verhindern kann und den Spike 2 sicher am Fahrzeugluftreifen 1 verankert.

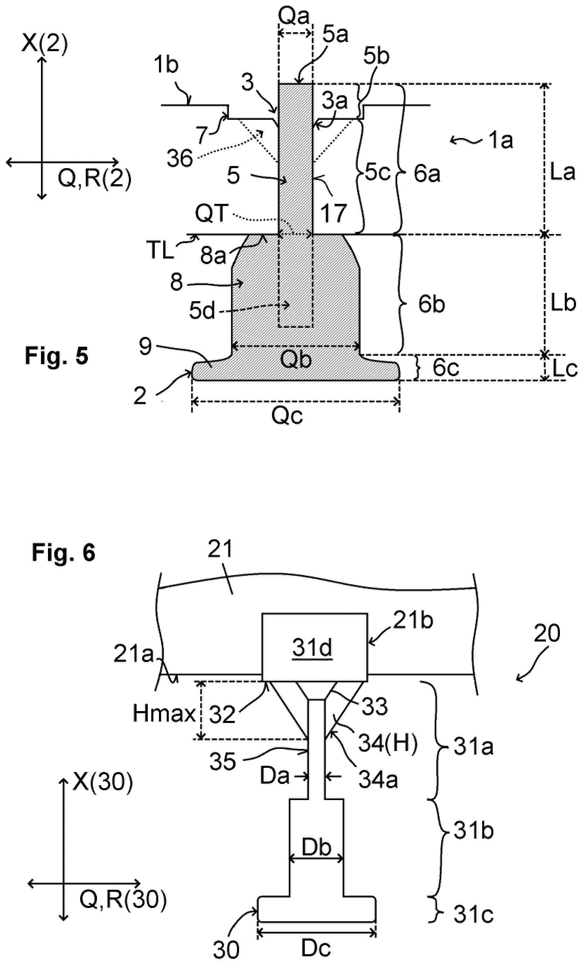

Gemäß einer in Fig. 5 dargestellten Ausführungsform können der obere Abschnitt 6a mit dem unumhüllten Pin 5 und der untere Abschnitt 6b mit dem ab der Trennlinie TL in Längsrichtung X nach unten hin größer werdenden unteren Querschnittsmaß Qb auch einteilig bzw. als ein einheitliches Bauteil gefertigt sein. Der Unterflansch 8 und der Pin 5 sind dann also aus demselben Material, vorzugsweise aus dem Hartmetall, beispielsweise Wolframcarbid, gefertigt. Dadurch ergibt sich zwar gegenüber den vorangehenden Ausführungen ein höheres Gewicht des Spikes 2 aber die Fertigung des Spikes 2 wird vereinfacht, da das Zusammenfügen von Pin 5 und Unterflansch 8 entfallen kann. Für diese Ausführung können grundsätzlich sämtliche Verläufe des oberen Querschnittsmaßes Qa, des unteren Querschnittsmaßes Qb und des Fuß-Querschnittsmaßes Qc wie für den zweiteiligen Spike 2 gemäß den vorangegangenen Ausführungen Anwendung finden.

Um einen solchen Spike 2 (in sämtlichen Ausführungsformen) sicher in dem Spikeloch 3 der Lauffläche 1a zu fixieren, kann die Außenseite des Spikes 2 optional sowohl im oberen Abschnitt 6a als auch im unteren Abschnitt 6b und im Fußabschnitt 6c des Spikes mit dem Haftvermittler 4 beschichtet und in einem anschließenden Wärmebehandlungsprozess aktiviert werden, so dass eine dauerhaltbare chemische bzw. stoffschlüssige Verbindung zwischen dem Spike 2 und der Lauffläche 1a ausgebildet wird.

Für die Herstellung oder das Formen einer Lauffläche 1a eines Fahrzeugluftreifens 1 mit Spikelöchern 3, in die insbesondere die oben beschriebenen Spikes 2 oder vergleichbare Spikes 2 mit einem schlanken oder schmalen oberen Abschnitt 6a eingesetzt werden können, ist eine Vulkanisationsvorrichtung 20 vorgesehen, die eine Reihe von in Fig. 6 dargestellten Vulkanisationssegmenten 21 aufweist, die in einer Kreisform angeordnet sind. Auf Oberflächen 21a der jeweiligen Vulkanisationselemente 21, die jeweils die unprofilierte Reifenform der Lauffläche 1a des Fahrzeugluftreifens 1 abbilden, sind senkrecht abstehend Formstifte 30 bzw. Mold-Pins angeordnet, die beim Vulkanisationsprozess in die geformte Lauffläche 1a des Fahrzeugluftreifens 1 eintauchen, um das jeweilige Spikeloch 3 darin auszubilden.

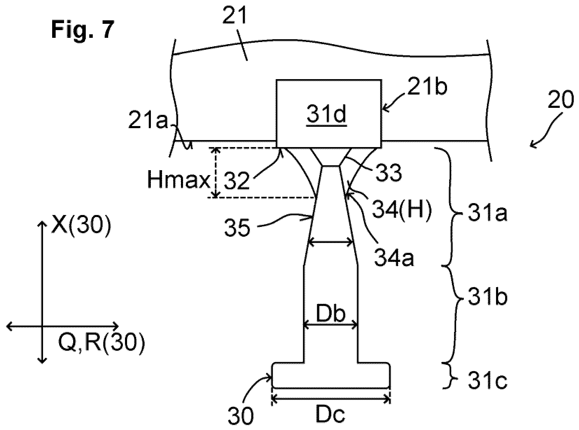

Um dabei ein Spikeloch 3 für die Form des Spikes 2 mit dem schlanken bzw. schmalen oberen Abschnitt 6a und dem breiteren unteren Abschnitt 6b sowie dem Fußabschnitt 6c bereitzustellen, weist der Formstift 30 einen oberen Formabschnitt 31a, einen unteren Formabschnitt 31b und einen Fuß-Formabschnitt 31c auf, wie in Fig. 6 und 7 dargestellt. Ferner ist ein Fixierungsabschnitt 31d vorgesehen, über den der jeweilige Formstift 30 in einer Aufnahmeöffnung 21b, beispielsweise in einem Gewindeloch oder einem konisch verlaufenden Loch, im jeweiligen Vulkanisationssegment 21 aufgenommen ist, beispielsweise eingeschraubt oder eingepresst ist. Der Formstift 30 ist dabei derartig in der Aufnahmeöffnung 21b aufgenommen, dass der oberen Formabschnitt 31a, der untere Formabschnitt 31b und der Fuß-Formabschnitt 31c senkrecht vom jeweiligen Vulkanisationssegment 21 abstehen, so dass sich ein entsprechend senkrecht in die Lauffläche 1a eintauchendes Spikeloch 3 ausbilden kann, in dem die Kontur des Formstifts 30 abgebildet ist. Der Fixierungsabschnitt 31d des Formstifts 30 steht zudem etwas aus dem jeweiligen Vulkanisierungssegment 21 heraus bzw. hervor, so dass sich ergänzend eine Stufe 7 in der Lauffläche 1a um das Spikeloch 3 ausbildet, wie in den Figuren 2 bis 5 dargestellt. Das durch einen solchen Formstift 30 ausgebildete Spikeloch 3 ist in der Regel ca. 1mm kürzer als der einzupressende Spike 2, dessen Länge je nach Anwendung beispielsweise zwischen 7mm und 14mm betragen kann.

Der Formstift 30 ist dabei derartig aus den einzelnen Abschnitten 31a, 31b, 31c, 31d zusammengesetzt, dass der Fixierungsabschnitt 31d in Längsrichtung X (bezüglich des Formstifts 30) mit dem oberen Formabschnitt 31a verbunden ist und sich nachfolgend der untere Formabschnitt 31b und der Fuß-Formabschnitt 31c anschließen. Die einzelnen Abschnitte 31a, 31b, 31c, 31d sind dabei vorzugsweise einteilig ausgeführt.

Der Fixierungsabschnitt 31d geht ausgehend von seiner Oberfläche 32 über eine konische Schulter 33 kegelstumpfförmig in den oberen Formabschnitt 31a über. Der obere Formabschnitt 31a weist einen oberen Form-Durchmesser Da von vorzugsweise zwischen 1.5mm und 4mm auf, der kleiner ist als ein unterer Form-Durchmesser Db des unteren Formabschnitts 31b von vorzugsweise zwischen 1.5mm und 7mm und eines Fuß-Durchmesser Dc des Fuß-Formabschnitts 31c von vorzugsweise zwischen 6mm bis 11mm. Der obere Formabschnitt 31a kann eine zylindrische Form mit einem konstanten oberen Form-Durchmesser Da aufweisen (s. Fig. 6) oder aber eine konische Form mit einem sich zum unteren Formabschnitt 31b hin vergrößernden oberen Form-Durchmesser Da (s. Fig. 7), wobei dies z.B. davon abhängen kann, wie der Spike 3 in den einzelnen Abschnitten 6a, 6b, 6c geformt ist. Der untere Form-Durchmesser Db ist wiederum kleiner als der Fuß-Durchmesser Dc, wobei der untere Form-Durchmesser Db wie in Fig. 6 und 7 dargestellt konstant ist.

Auf diese Weise wird der Verlauf des oben anhand der Figuren 1 bis 5 beschriebenen Spikes 2 grob nachgebildet, der in seinem oberen Abschnitt 6a ein oberes Querschnittsmaß Qa aufweist (korrespondierend zum oberen Formabschnitt 31a mit dem oberen Form-Durchmesser Da), das kleiner ist als das untere Querschnittsmaß Qb des unteren Abschnittes 6b des Spikes 2 (korrespondierend zum unteren Formabschnitt 31b mit dem unteren Form-Durchmesser Db) und als das Fuß-Querschnittsmaß Qc des Fuß-Abschnittes 6c des Spikes 2 (korrespondierend zum Fuß-Formabschnitt 31c mit dem Fuß-Durchmesser Dc).

Um nach dem Vulkanisierungsvorgang mit einem derartig schmalen bzw. schlanken oberen Formabschnitt 31a zu vermeiden, dass der Formstift 30 beim Entformen des Fahrzeugluftreifens 1 abbricht oder anderweitig beschädigt wird, ist ferner vorgesehen, dass von der Oberfläche 32 des Fixierungsabschnittes 31d mindestens zwei Lamellen 34 in Richtung des oberen Formabschnitts 31a abstehen, vorzugsweise senkrecht abstehen. Diese Lamellen 34 sind mit der kegelstumpfförmigen Schulter 33 und vor allem mit dem oberen Formabschnitt 31a des Formstifts 30 verbunden, so dass der Formstift 30 in Querrichtung Q bzw. in die radiale Richtung R (bezüglich des Formstifts 30) abgestützt wird.

Die Lamellen 34 stehen in etwa senkrecht von einer Wandung 35 des oberen Formabschnittes 31a ab, insbesondere an gegenüberliegenden Seiten. Dabei wird eine Lamellenhöhe H in Längsrichtung X (bezüglich des Formstifts 30) der jeweiligen Lamelle 34 ausgehend von der Wandung 35 des oberen Formabschnittes 31a in Querrichtung Q bzw. in radialer Richtung R (bezüglich des Formstifts 30)) nach außen hin immer geringer. Eine maximale Lammellenhöhe Hmax, die am Berührpunkt der Wandung 35 vorliegt, beträgt dabei beispielsweise zwischen 2mm und 3mm.

Eine freie Kante 34a der jeweiligen Lamelle 34, die zwischen der Oberfläche 32 des Fixierungsabschnittes 31d und der Wandung 35 des oberen Formabschnittes 31a verläuft, weist dabei einen linearen Verlauf (s. Fig. 6) oder einen abgerundeten Verlauf (s. Fig. 7) auf, so dass sich Lamellen 34 mit einer im Wesentlichen dreieckigen Form ausbilden.

Durch derartig geformte Lamellen 34 wird die Querstabilität des Formstifts 30 während des Entformens verbessert. Dadurch können auch sehr schmale oder schlanke obere Form-Durchmesser Da bei breiteren unteren Formdurchmessern Db gewählt werden, so dass entsprechend ein Spike 2 mit einem sehr schmalen oder schlanken oberen Abschnitt 6a und einem breiteren unteren Abschnitt 6b sicher in dem so ausgebildeten Spikeloch 3 eingepresst bzw. gehalten werden kann.

Weiterhin werden die Lamellen 34 aber auch in der vulkanisierten Lauffläche 1a des Fahrzeugluftreifens 1 abgebildet, wie schematisch in Fig. 2 dargestellt, so dass darin benachbart zu dem jeweiligen Spikeloch 3 lamellenartige Vertiefungen 36 oder Einkerbungen eingeformt werden, die denselben Verlauf aufweisen, wie die jeweilige Lamelle 34, d.h. dreieckig mit einem linearen oder abgerundeten Verlauf oder dergleichen. Demnach bilden sich radial angrenzend an einen oberen Endbereich 3a des Spikelochs 3 ausgehend von einer Oberfläche 1b der Lauffläche 1a, an der die Oberflächen 21a der Vulkanisationssegmente 21 sowie die Oberfläche 32 des Fixierungsabschnittes 31d anliegen, Vertiefungen 36.

Da die Lamellen 34 mit der Wandung 35 des oberen Formabschnittes 31a des Formstifts 30 verbunden sind, sind die Vertiefungen 36 in dem oberen Endbereich 3a auch mit dem Spikeloch 3 verbunden. Die Vertiefungen 36 weisen dabei am Übergang zum Spikeloch 3 eine maximale Tiefe Tmax ab der Oberfläche 1b der Lauffläche 1a auf, die in etwa der maximalen Lammellenhöhe Hmax der Lamelle 34 entspricht. Ausgehend davon wird eine Tiefe T der Vertiefung 36 korrespondierend zu der Form der freien Kante 34a bzw. des Verlaufs der Lamellenhöhe H der jeweiligen Lamelle 34 immer geringer mit größer werdendem Abstand zum Spikeloch 3.

Durch eine entsprechend gewählte Form der Lamelle 34 kann also zusätzlich die Flexibilität des Spikes 2 im Spikeloch 3 eingestellt werden, da der Spike 2 mit seinem unumhüllten oberen Abschnitt 6a im oberen Endbereich 3a des Spikelochs 3 direkt an der Lauffläche 1a anliegt. Die ausgebildeten lamellenartigen Vertiefungen 36, die insbesondere benachbart zum oberen Endbereich 3a des Spikelochs 3 liegen, haben dann also auch einen Einfluss auf das Bewegungsverhalten des eingepressten Spikes 2 in seinem oberen Abschnitt 6a. Der Einfluss auf den unteren Abschnitt 6b und den Fußabschnitt 6c ist hingegen eher marginal, da die Lamellen 34 lediglich im oberen Formabschnitt 31a des Formstifts 30 bzw. die Vertiefungen 36 lediglich oberen Endbereich 3a des Spikelochs 3 verlaufen.

Diese Einstellung des Bewegungsverhaltens des Spikes 3 über die Lamellen 34 im Formstift 30 bzw. die Vertiefungen 36 benachbart zum Spikeloch 3 im Fahrzeugluftreifen 1 ist dabei nicht nur auf den in Fig. 1 bis 5 dargestellten Spike 3 beschränkt. Auch andere Spikeformen können davon profitieren, so dass auch Formstifte 30 mit anders ausgebildeten Formabschnitten 31a, 31b, 31c (z.B. Da = Db) derartige Lamellen 34 aufweisen können.

### Bezugszeichenliste

- 1: Fahrzeugluftreifen
- 1a: Lauffläche des Fahrzeugreifens 1
- 1b: Oberfläche der Lauffläche 1a
- 2: Spike
- 3: Spikeloch
- 3a: oberer Endbereich des Spikelochs 3
- 4: Haftvermittler
- 5: Pin
- 5a: freies Ende des Pins 5
- 5b: hervorstehender Abschnitt des Pins 5
- 5c: Stützabschnitt des Pins 5
- 5d: unteres Ende des Pins 5
- 6a: oberer Abschnitt des Spikes 2
- 6b: unterer Abschnitt des Spikes 2
- 6c: Fußabschnitt des Spikes 2
- 7: Stufe
- 8: Unterflansch
- 8a: Oberseite des Unterflanschs 8
- 9: Fußflansch
- 10: Einkerbung
- 17: Außenseite des Stützabschnitts 5c des Pins 5
- 20: Vulkanisationsvorrichtung
- 21: Vulkanisationssegmente
- 21a: Oberfläche des Vulkanisationselements 21
- 21b: Aufnahmeöffnung in dem Vulkanisationselemente 21
- 30: Formstift (Mold-Pin)
- 31a: oberer Formabschnitt
- 31b: unterer Formabschnitt
- 31c: Fuß-Formabschnitt
- 31d: Fixierungsabschnitt
- 32: Oberfläche des Fixierungsabschnittes 31d
- 33: Schulter
- 34: Lamelle
- 34a: freie Kante der Lamelle 34
- 35: Wandung des oberen Formabschnittes 31a
- 36: lamellenartige Vertiefung in der Lauffläche 1a
- Da: oberer Form-Durchmesser
- Db: unterer Form-Durchmesser
- Dc: Fuß-Durchmesser
- H: Lamellenhöhe
- HMax: maximale Lamellenhöhe
- La: obere Längsausdehnung
- Lb: untere Längsausdehnung
- Lc: Fuß-Längsausdehnung
- PT: Profiltiefe
- Q: Querrichtung
- Qa: oberes Querschnittsmaß
- Qb: unteres Querschnittsmaß
- Qc: Fuß-Querschnittsmaß
- QT: Trenn-Querschnittsmaß
- R: radiale Richtung
- So: oberer Scheitelpunkt
- Su: unterer Scheitelpunkt
- T: Tiefe der Vertiefung 36
- TMax: maximale Tiefe der Vertiefung 36
- TL: Trennlinie
- U: Untergrund
- X: Längsrichtung

## Patentansprüche

1. Formstift (30) für ein Vulkanisationssegment (21) einer Vulkanisationsvorrichtung (20) zum Ausbilden eines Spikelochs (3) in einer Lauffläche (1a) eines Fahrzeugluftreifens (1), wobei der Formstift (30) aufweist:
- einen Fixierungsabschnitt (31d) zum Fixieren des Formstifts (30) in dem Vulkanisationssegment (21);
- Formabschnitte (31a, 31b, 31c), die sich in Längsrichtung (X) an den Fixierungsabschnitt (31d) anschließen, wobei die Formabschnitte (31a, 31b, 31c) jeweils einen Form-Durchmesser (Da, Db, Dc) aufweisen,
wobei von einer Oberfläche (32) des Fixierungsabschnittes (31d) mindestens eine Lamelle (34), vorzugsweise zwei Lamellen (34), in Richtung eines oberen Formabschnitts (31a), der in Längsrichtung (X) an den Fixierungsabschnitt (31d) angrenzt, absteht,
**dadurch gekennzeichnet, dass**
die mindestens eine Lamelle (34) mit einer Wandung (35) des oberen Formabschnitts (31a) verbunden ist und eine Lamellenhöhe (H) der mindestens einen Lamelle (34) ausgehend von der Wandung (35) des oberen Formabschnittes (31a) kleiner wird, so dass die mindestens eine Lamelle (34) an ihrem Berührpunkt mit der Wandung (35) eine maximale Lammellenhöhe (Hmax) aufweist.

2. Formstift (30) nach Anspruch 1,
**dadurch gekennzeichnet, dass**
der obere Formabschnitt (31a) des Formstifts (30), der in Längsrichtung (X) an den Fixierungsabschnitt (31d) angrenzt, einen oberen Form-Durchmesser (Da) aufweist, der kleiner ist
- als ein unterer Form-Durchmesser (Db) eines unteren Formabschnitts (31b) des Formstifts (30), der in Längsrichtung (X) an den oberen Formabschnitt (31a) angrenzt, und
- als ein Fuß-Durchmesser (Dc) eines Fuß-Formabschnitts (31c), der in Längsrichtung (X) an den unteren Formabschnitt (31b) angrenzt.

3. Formstift (30) nach Anspruch 2,
**dadurch gekennzeichnet, dass**
der obere Formabschnitt (31a) eine zylindrische Form mit einem konstanten oberen Form-Durchmesser (Da) aufweist oder eine konische Form mit einem sich zum unteren Formabschnitt (31b) hin vergrößernden oberen Form-Durchmesser (Da) aufweist.

4. Formstift (30) nach Anspruch 2 oder 3,
**dadurch gekennzeichnet, dass**
der obere Formabschnitt (31a) einen oberen Form-Durchmesser (Da) von zwischen 1.5mm und 4mm aufweist und/oder der untere Formabschnitt (31a) einen unteren Form-Durchmesser (Db) von zwischen 1.5mm und 7mm aufweist.

5. Formstift (30) nach einem der vorhergehenden Ansprüche,
**dadurch gekennzeichnet, dass**
eine freie Kante (34a) der mindestens einen Lamelle (34), die zwischen der Oberfläche (32) des Fixierungsabschnittes (31d) und der Wandung (35) des oberen Formabschnittes (31a) verläuft, einen linearen Verlauf oder einen abgerundeten Verlauf oder einen abgestuften Verlauf aufweist, wobei die freie Kante (34a) der mindestens einen Lamelle (34) zur Oberfläche (32) des Fixierungsabschnittes (31d) hin abfällt.

6. Formstift (30) nach einem der vorhergehenden Ansprüche,
**dadurch gekennzeichnet, dass**
die maximale Lamellenhöhe (HMax) an der Wandung (35) zwischen 2mm und 3mm beträgt.

7. Formstift (30) nach einem der vorhergehenden Ansprüche,
**dadurch gekennzeichnet, dass**
der Fixierungsabschnitt (31d), die Formabschnitte (31a, 31b, 31c) und die mindestens eine Lamelle (34) einteilig gefertigt sind.

8. Vulkanisationsvorrichtung (20) mit mehreren kreisförmig angeordneten Vulkanisationssegmenten (21) zur Herstellung eines Fahrzeugluftreifens (1), wobei in einer Oberfläche (21a) des jeweiligen Vulkanisationssegments (21) mehrere Aufnahmeöffnungen (21b) angeordnet sind, in die jeweils ein Fixierungsabschnitt (31d) eines Formstiftes (30) gemäß einem der vorherigen Ansprüche derartig aufgenommen ist, dass die Formabschnitte (31a, 31b, 31c) senkrecht von dem jeweiligen Vulkanisationssegment (21) abstehen und die mindestens eine Lamelle (34) von einer Oberfläche (32) des jeweiligen Fixierungsabschnittes (31d) in Richtung der Wandung (35) des oberen Formabschnitts (31a), mit der die mindestens eine Lamelle (34) verbunden ist, hervorsteht.

9. Fahrzeugluftreifen (1) mit einer Lauffläche (1a) und in der Lauffläche (1a) angeordneten Spikelöchern (3), insbesondere hergestellt in einer Vulkanisationsvorrichtung (20) nach Anspruch 8, wobei in den Spikelöchern (3) jeweils ein Spike (2) eingebracht ist, wobei benachbart zu dem jeweiligen Spikeloch (3) ausgehend von einer Oberfläche (1b) der Lauffläche (1a) mindestens eine lamellenartige Vertiefung (36), vorzugsweise zwei lamellenartige Vertiefungen (36), eingeformt sind,
**dadurch gekennzeichnet, dass**
ein oberer Endbereich (3a) des Spikelochs (3) in die mindestens eine Vertiefung (36) übergeht, wobei eine Tiefe (T) der Vertiefung (36) mit größer werdendem Abstand zum Spikeloch (3) geringer wird, insbesondere ausgehend von dem Spikeloch (3).

10. Fahrzeugluftreifen (1) nach Anspruch 9,
**dadurch gekennzeichnet, dass**
die mindestens eine Vertiefung (36) an einem Übergang zum Spikeloch (3) eine maximale Tiefe (Tmax) aufweist und die Tiefe (T) der Vertiefung (36) ausgehend davon mit größer werdendem Abstand zum Spikeloch (3) geringer wird.

11. Fahrzeugluftreifen (1) nach Anspruch 9 oder 10,
**dadurch gekennzeichnet, dass**
der jeweilige Spike (2) in Längsrichtung (X) aneinandergrenzend einen oberen Abschnitt (6a), einen unteren Abschnitt (6b) und einen Fußabschnitt (6c) aufweist, wobei der obere Abschnitt (6a) des Spikes (2) durch einen Pin (5) gebildet ist, wobei der Pin (5) innerhalb des oberen Abschnittes (6a)
- einen Stützabschnitt (5c) aufweist, der innerhalb der Lauffläche (1a) angeordnet ist und der sich mit einer Außenseite (17) direkt an der Lauffläche (1a) abstützt, und weiterhin
- einen hervorstehenden Abschnitt (5b) aufweist, der aus der Lauffläche (1a) herausragt, so dass ein freies Ende (5a) des Pins (5) von der Lauffläche (1a) hervorsteht; und
wobei ein oberes Querschnittsmaß (Qa) innerhalb des oberen Abschnittes (6a) des Spikes (2) über eine gesamte obere Längsausdehnung (La) des oberen Abschnittes (6a) kleiner ist als ein Fuß-Querschnittsmaß (Qc) des Fußabschnittes (6c) des Spikes (2) zum Verankern des jeweiligen Spikes (2) in dem Spikeloch (3), und wobei ein unteres Querschnittsmaß (Qb) des unteren Abschnittes (6b) des Spikes (2) größer oder gleich einem Trenn-Querschnittsmaß (QT) ist, das der obere Abschnitt (6a) an einer Trennlinie (TL) einnimmt, die den oberen Abschnitt (6a) des Spikes (2) von dem unteren Abschnitt (6b) des Spikes (2) trennt.
